# NEW EUROPEAN PATENT SPECIFICATION

(11) **EP 1 106 590 B2**
(45) Date of publication and mention of the opposition decision: **10.01.2018**
(45) Mention of the grant of the patent: 02.01.2008
(21) Application number: 00204402.2
(22) Date of filing: 11.12.2000
(51) Int. Cl.: C04B 41/49, E04G 23/02

(54) **Method for the treatment of concrete and masonry**
Verfahren zur Behandlung von Beton und Mauerwerk
Méthode pour le traitement de béton et de maçonnerie

(30) Priority: 09.12.1999 GB 9929085; 07.06.2000 GB 0013819
(43) Date of publication of application: 13.06.2001
(73) Proprietor: Safeguard Chemicals Ltd., Horsham RH13 5 QL (GB)
(72) Inventor: Payne, David Stanley, Horsham RH13 5QL (GB)
(74) Representative: Evans, Jacqueline Gail Victoria

(56) References cited:
- EP-A- 0 736 504
- WO-A-95/25706
- WO-A1-00//46176
- US-A- 5 847 037
- US-A- 5 962 585
- US-A- 5 965 664
- US-A- 6 087 438
- Stanhope Injection Mortar" BBA Board of Agreement Certificate No. 93/2870 dated 1993
- Safety Data Sheet (91/156/EEC) for Wacker Bs Creme C, dated 19/01/2001
- Masonry Water Repellents- Wacker BS Creme C
- "Tegosivin" HE 328 produkt information from Goldschmidt Industrial Specialties dated 0382003

## Description

This invention relates to a method for the treatment of concrete and masonry to create a barrier to the passage of moisture.

Concrete and bricks are widely used constructional materials for buildings. Suitably used they have excellent strength and potentially such buildings have a life that can be measured in centuries if maintained against the ravages of the elements. A problem that frequently occurs, particularly but not exclusively in older buildings, is the ingress of water. Due to the porous nature of such building materials moisture can be absorbed through capillary action through contact with the ground on which the building stands.

Various means have been tried to prevent water ingress through capillary action such as by applying electrical potentials, treatments with varnish and with water repellent compositions. The latter is one of the more effective methods but the existing methods of injecting the repellent compositions into concrete and brickwork are labour intensive and time consuming. Holes are drilled in the fabric of the building to be treated and thereafter a liquid composition containing a water repellent compound is injected at high pressure. This requires each hole to be sealed by an injection nozzle in a manner that can withstand the pressure for quite long periods. The liquid compositions used in the injection process normally contain the water repellent compound in solution in an organic solvent. Ultimately this solvent evaporates into the environment which is undesirable and may create a level of solvent vapour which is banned by legislation.

In an alternative method the water repellent composition is plugged into the hole in the form of a frozen rod. However this inevitably adds water to the building as the rod melts. After treatment the water from the thawed rods must dry out before the repellent becomes effective.

Both methods require machinery to be transported to site. The injection method described requires an operator to carry a compressor on to the site before treatment and obtain pneumatic or electric power unless the compressor is self powered. In the second method it is necessary to provide refrigerating equipment with an associated power supply or, if only a limited area is to be treated, a thermally insulated carrier with solid carbon dioxide or similar coolant.

The present invention provides a method of treating the fabric of a building to prevent water ingress which avoids the need for fluid compressors or refrigerating means to be carried on site and power supplies to be arranged.

According to the present invention there is provided a method of treating the fabric of a building to prevent the ingress of water characterised in that a number of cavities are drilled into the relevant area of the building and thereafter the cavities are filled with a thixotropic paste comprising at least one silane compound, at least one siloxane compound and a thickening agent all in a water base.

The silane compound is preferably an alkyl alkoxy silane such as iso-octyl triexthoxy silane. Such compounds hydrolyse in alkaline environments, such as concrete and fresh mortar, to form siloxane polymers. The polymers formed by decomposition deposit on the surface of the pores in masonry to provide a water repellent coating. As a result the treated material resists water penetration. Such silane compounds may be mixed with oligomers having 3 to 8 siloxane units carrying alkoxy residues to reduce the volatility. The oligomers react with water in the same manner as the silanes to form siloxane polymers.

Suitable blends of alkyl alkoxy silanes and siloxane oligomer blends are available as an aqueous emulsion containing 80 percent of the active ingredients under the trade mark "Wacker" BS Creme from Wacker Chemie in Germany. The silanes and siloxanes will hydrolyse in alkaline environments such concrete, mortar and some stone. The combination ensures that water repellency will be imparted to mixed masonry regardless of its pH.

A second siloxane is preferably present in the form of a modified polymethyl siloxane. Compositions containing such compounds are commercially available as a solvent free water emulsion containing 50 per cent of the siloxane under the registered trade mark "Tegosivin HE 328" from Th. Goldschmidt AG in Essen, Germany.

The thickening agent imparts thixotropy to the paste so that it remains in the cavity while the water base departs through evaporation and/or diffusion. The thickening agent can be of any type that creates thixotropy when incorporated into the silane/siloxane mixture. A preferred thickening agent is a modified bentonite such as that sold under the trade mark Optigel WX by Sud-Chemie in Munich, Germany.

The components are mixed in an aqueous environment so that the silane and siloxane components, which are preferably in the form of aqueous emulsions, are formed into a thixotropic paste by the incorporation of the thickening agent. The paste so formed may contain up to 50 per cent water.

In use the paste having the composition and prepared as described above is injected into cylindrical cavities drilled in the concrete and/or masonry to be treated. Being thixotropic the paste does not flow and remains in the cavities after injection. In the course of a few days the water component of the mixture disperses through evaporation and diffusion. At the same time the silane and siloxane components diffuse into the concrete and/or masonry creating water repellancy and forming a damp repellent zone between the drilled cavities.

Particularly effective compositions contain about 40 percent octyl triethoxy silane and siloxane oligomer, 25 percent modified polymethyl siloxane, one percent bentonite and the residue water. This composition is in the form of a thixotropic paste in which the silane and siloxane components are the discontinuous phase of an emulsion with an aqueous continuous phase. These thixotropic compositions may be easily injected into cavities, such as bored holes, in building fabric, such as stone, concrete and masonry. The water phase permeates into the building fabric leaving the internal pores coated with siloxanes present in the composition and those formed by hydrolysis of the silane and the associated oligomers.

## Claims

1. A method of treating the fabric of a building to prevent the ingress of water **characterised in that** a number of cavities are drilled into the relevant area of the building and thereafter the cavities are filled with a thixotropic paste comprising at least one silane compound, at least one siloxane compound and a thickening agent, all in a water base.

2. The method as claimed in claim 1, **characterized in that** the cavities are filled with the thixotropic paste without the use of a fluid compressor.

3. The method as claimed in claim 1 or claim 2, **characterised in that** the silane compound is an alkyl alkoxy silane.

4. The method as claimed in any of the preceding claims, **characterised in that** the silane compound is iso-octyl triethoxy silane.

5. The method as claimed in any of the preceding claims, **characterised in that** the silane compound or compounds are be mixed with oligomers having 3 to 8 siloxane units and carrying alkoxy residues.

6. The method as claimed in any of the preceding claims, **characterised in that** a second siloxane is present in the form of a modified polymethyl siloxane.

7. The method as claimed in claim 6, **characterised in that** the second siloxane is a solvent free water emulsion containing 50 per cent by weight of the polymethyl siloxane.

8. The method as claimed in any of the preceding claims, **characterised in that** the thickening agent is a modified bentonite.

## Patentansprüche

1. Verfahren zum Behandeln der Bausubstanz eines Bauwerks, um den Eintritt von Wasser zu verhindern, **dadurch gekennzeichnet, dass** eine Anzahl von Hohlräumen in den relevanten Bereich des Bauwerks gebohrt werden und danach die Hohlräume mit einer thixotropen Paste gefüllt werden, die mindestens eine Silanverbindung, mindestens ein Siloxanverbindung und ein Verdickungsmittel, alle in einer Wasserbasis, umfasst.

2. Verfahren wie in Anspruch 1 beansprucht, **dadurch gekennzeichnet, dass** die Hohlräume mit der thixotropen Paste ohne Einsatz eines Fluidkompressors gefüllt werden.

3. Verfahren wie in Anspruch 1 oder Anspruch 2 beansprucht, **dadurch gekennzeichnet, dass** die Silanverbindung ein Alkylalkoxysilan ist.

4. Verfahren wie in irgendeinem der vorhergehenden Ansprüche beansprucht, **dadurch gekennzeichnet, dass** die Silanverbindung Isooctyltriethoxysilan ist.

5. Verfahren wie in irgendeinem der vorhergehenden Ansprüche beansprucht, **dadurch gekennzeichnet, dass** die Silanverbindung oder -verbindungen mit Oligomeren, die 3 bis 8 Siloxaneinheiten aufweisen und Alkoxyreste tragen, gemischt werden.

6. Verfahren wie in irgendeinem der vorhergehenden Ansprüche beansprucht, **dadurch gekennzeichnet, dass** ein zweites Siloxan in Form eines modifizierten Polymethylsiloxans vorhanden ist.

7. Verfahren wie in Anspruch 6 beansprucht, **dadurch gekennzeichnet, dass** das zweite Siloxan eine lösungsmittelfreie Wasseremulsion ist, die 50 Gew.-% des Polymethylsiloxans enthält.

8. Verfahren wie in irgendeinem der vorhergehenden Ansprüche beansprucht, **dadurch gekennzeichnet, dass** das Verdickungsmittel ein modifizierter Bentonit ist.

## Revendications

1. Procédé permettant de traiter la structure d'un bâtiment pour empêcher l'entrée d'eau, **caractérisé en ce qu'**un certain nombre de cavités sont forées dans la surface correspondante du bâtiment puis les cavités sont remplies d'une pâte thixotrope comprenant au moins un composant silane, au moins un composant siloxane et un agent épaississant, tous dans une base d'eau.

2. Procédé selon la revendication 1, **caractérisé en ce que** les cavités sont remplies de la pâte thixotrope sans utiliser de compresseur de fluide.

3. Procédé selon la revendication 1 ou 2, **caractérisé en ce que** le composant silane est un alkyl alcoxy silane.

4. Procédé selon l'une quelconque des revendications précédentes, **caractérisé en ce que** le composant silane est un iso-octyl triéthoxy silane.

5. Procédé selon l'une quelconque des revendications précédentes, **caractérisé en ce que** le composant ou les composants silane doivent être mélangés à des oligomères ayant entre 3 et 8 unités siloxane et portant des résidus alcoxy.

6. Procédé selon l'une quelconque des revendications précédentes, **caractérisé en ce qu'**un deuxième siloxane est présent sous la forme d'un polyméthyl siloxane modifié.

7. Procédé selon la revendication 6, **caractérisé en ce que** le deuxième siloxane est une émulsion d'eau sans solvant contenant 50 pour cent en poids du polyméthyl siloxane.

8. Procédé selon l'une quelconque des revendications précédentes, **caractérisé en ce que** l'agent épaississant est une bentonite modifiée.
